# EUROPEAN PATENT APPLICATION

(11) **EP 1 538 135 A1**
(43) Date of publication of application: **08.06.2005**
(21) Application number: 04447002.9
(22) Date of filing: 06.01.2004
(51) Int. Cl.: C04B 41/53, C11D 3/34

(54) **Composition and working method to remove oxides of metals (rust) from surfaces**

(30) Priority: 19.11.2003 BE 200300618
(71) Applicant: Bio Services Belgium bvba, 8570 Vichte (BE)
(72) Inventor: Vermeulen, Jan Roger Denis, 8570 Vichte (BE); De Rycke, Gino Luc Cyriel, 2540 Hove (BE)

(57) **Abstract**

The invention contains a method and chemical compositions to remove metaloxides from surfaces, more specifically surfaces of natural and artificial stone pavements, tiles, flags, bricks etc.

The chemical coposition is based on salts of thioglycolicacid.

## Description

The hereafter stated invention contains a method and chemical compositions to remove metaloxides from surfaces. With surfaces, in this invention, one means the surfaces of natural and artificial stone pavements, tiles, flags, bricks etc.
or in general surfaces wich are not to be considered as electrical conducting.

The compositions can be used in concentrated or diluted form, yes or no in presence of other ingredients with influence on other characteristics (as there are viscosity, surface tension, odor, tenability, etc.)
The composition exists essentialy in a solution of one or more salts of thioglycolic acid.

Remarkable for the the application method is the time-limit the composition can stay on the surface of the materials. These caracteristics and other particularities of the invention appear in the hereafter mentioned description, with reference to the practical application, only as a non limitating example of implementation in practice.

It is a common known phenomenon that objects like tiles, natural stone surfaces etc. show discolorations on their surface in presence of metal-compounds.
Most people want to remove this non wanted discoloration because of esthetical reasons.
Next to mechanical methods ,that remove more or less the upper surface layers, there 25 exists different non optimal chemical methods.
The most important method is the treatment with acids , like there are oxalic acid, hydrogenchloride and many others.

This method has a big disadvantage: lots of types of stone, tiles, concrete or cement-containing materials contain substances like CaCo3 etc.... which are more or less dissolved or affected by the above mentioned compounds...
This means these surfaces are damaged, giving also bigger porosity, so that their quality is diminishing.
Another disadvantage of this method is that one can see in practice that not all forms of oxidation (with discoloration) are completely removed so still additional treatments are necessary to arrive at a more or less acceptable result.
Another method exists in treatment with reducing compounds, such as sulfite.
Also this method is known by experts not to give complete removal of the metal-oxides.
A similar method is putting complexing agents onto the oxides like chelates, ammonia or amines with similar insufficient results.
Still another method exists in applicating pastas on the surfaces to let lye-out the "rust" during a long time, in a non-oxidizing environment. This method is, besides the poor result, not at all user-friendly for bigger surfaces.

From previous statements we can conclude that there is no user-friendly method that completely removes oxidation from tiles etc. without damaging their surfaces.
Now we found out, to our own surprise, that watery solutions of salts of thioglycolic acid very easily and effectively remove oxidation, this when applicated according to the right method as described hereafter.
The solution of the salt or mixture of the salts of thioglycolic acid are applicated on the object that shows the oxidation.

In a very short period of time (minutes) one can establish that the solution (in the case of iron-oxides) colours purple-violet. This means that the iron, in whatever form present in the treated object, is embedded in the compounds of the solution added on the surface, and thus has left the object.
For other metal-oxides there are different or no discolorations.

This (purple-violet in case of iron-oxides) solution must now be removed with mechanical methods or by rinsing with water. It is an essential part in the working method that the solution is not left on the surface because otherwise after time (and certainly after desiccation) mostly there will be formation and deposit of unsolvable compounds on the surface.

If after removal of the coloured solution there are still rust-stains present (mostly after too short time) on the object, then the working method has to be repeated until satisfactory result is obtained

The working method is also illustrated in the enclosed photographic takes.

Non limitative examples of compositions are:
o a 20% solution of ammiumthioglycolate at pH between 7 and 9
o a 20% solution of ethanolammoniumthioglycolate at between pH between 7 and 9, which has the supplementary advantage of a low odor level

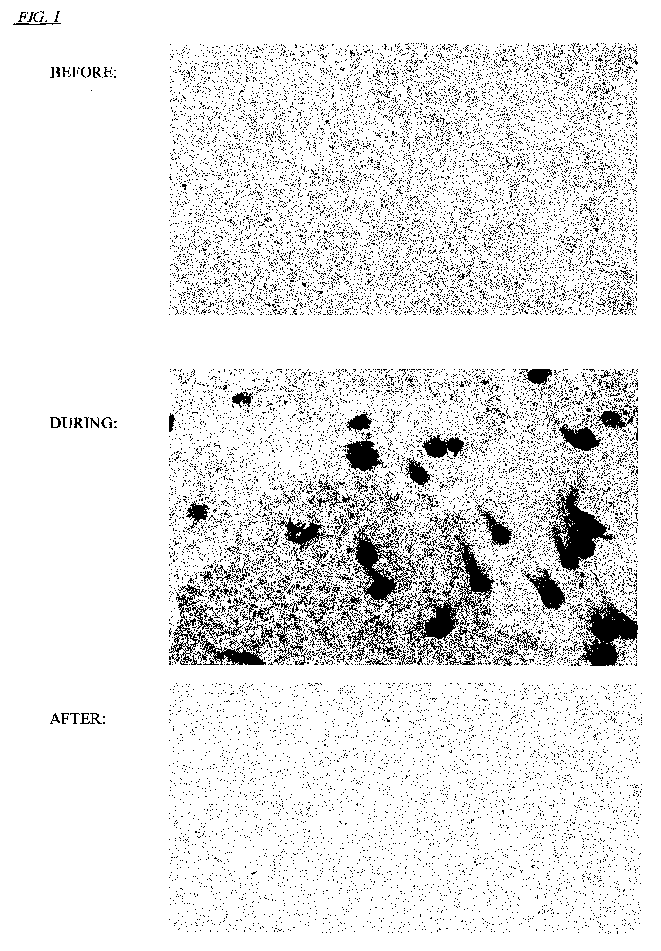

## Claims

1. Composition based on thiglycolic acid and one or more of its salts, to remove oxidative discolorations from non-electrical conducting surfaces.

2. Working method to let act during a limited time, a composition as in conclusion 1., on the treated surface followed by the removal of the obtained solution.

3. Composition as in conclusion 1., whereby the salt of thiglycolicacid is ammonia-thioglycolate.

4. Composition as in conclusion 1., whereby the salt of thiglycolicacid is ethanolammonium-thioglycolate

5. Working method as in conclusion 2., whereby the contact-time is maximal 24 hours.

6. Composition based on conclusion 1., which is also containing ingredients that influence odor, viscosity, surface-tension of the solution, tenebility etc.
